# EUROPÄISCHE PATENTANMELDUNG

(11) **EP 1 209 506 A2**
(43) Veröffentlichungstag der Anmeldung: **29.05.2002**
(21) Anmeldenummer: 01126709.3
(22) Anmeldetag: 08.11.2001
(51) Int. Cl.: G02B 23/18, G02B 7/00

(54) **Optische Anordnung mit einer bügel- oder haubenförmigen Kopfhalterung**

(30) Priorität: 11.11.2000 DE 20019216 U; 08.06.2001 DE 20109495 U
(71) Anmelder: Giehle, Andreas, 14476 Leest (DE)
(72) Erfinder: Giehle, Andreas, 14476 Leest (DE)
(74) Vertreter: Kruspig, Volkmar, Dipl.-Ing.

(57) **Zusammenfassung**

Die Erfindung betrifft eine optische Anordnung mit einer bügel- oder haubenförmigen Kopfhalterung, wobei im Stirnbereich der Halterung eine Befestigungsfläche oder -flansch vorgesehen ist, um ein Binokular eines Linsensystems für ein beidäugiges Beobachten aufzunehmen, sowie mit einer elektrischen Steuerungseinrichtung in Form eines speziellen Wangenschalters. Das Linsensystem umfaßt zwei Teleskope, deren seitlicher und der Abstand zwischen Okular und Auge des Beobachters einstellbar ist, sowie einen motorischen Antrieb zum gleichzeitigen, gegenläufigen Verschwenken der Teleskope in Längsachsenrichtung, wobei über die Steuerungseinrichtung der Antrieb veranlaßt ist, eine Verschwenkbewegung der Teleskope aufeinander zu oder voneinander weg auszuführen.

## Beschreibung

### Beschreibung

Die Erfindung betrifft eine optische Anordnung mit einer bügel- oder haubenförmigen Kopfhalterung, wobei im Stirnbereich der Halterung eine Befestigungsfläche oder -flansch vorgesehen ist, um ein Binokular eines Linsensystems für ein beidäugiges Beobachten aufzunehmen, sowie mit einer elektischen Steuerungseinrichtung gemäß Oberbegriff des Anspruchs 1, und einen elektromechanischen Schalter oder Taster, insbesondere zur Steuerung einer mit einem Antrieb versehenen optischen Anordnung, umfassend ein Binokular eines Linsensystems für ein beidäugiges Beobachten, wobei das Linsensystem zwei Teleskope aufweist, gemäß Oberbegriff des Patentanspruchs 15.

Aus der Patentschrift DE 31 45 106 C2 ist eine Beleuchtungsanordnung vorbekannt, die am Kopf einer Person zu befestigen ist.

Die dortige Lösung umfaßt eine Halteplatte mit Kugelgelenk, die über einen Visierschutz eines Pilotenhelms fixierbar ist, wobei an der Halteplatte eine Stromversorgungseinheit vorgesehen ist. Weiterhin ist ein Gummizug vorhanden, der die Halteplatte und die Stromversorgung bzw. das Stromversorgungsteil am Helm verspannt. Ein Mikroschalter ist mit einem Betätigungshebel versehen, der über eine mechanische Verbindung an einem Mikrophon befestigt werden kann, das üblicherweise mittels eines Bügels am Helm oder der Kopfhalterung fixiert ist. Der Mikroschalter weist einen Tastkopf auf, der über die Lippenbewegung aktiviert werdenkann, um eine Beleuchtungsquelle an- oder auszuschalten, welche wiederum am vorerwähnten Helm befestigt ist.
Mit der vorbeschriebenen konstruktiven Lösung soll z.B. ein Pilot in der Lage sein, die Beleuchtungsquelle einzuschalten, um bei einem Nachtflug mit Bildverstärkerbrille und nicht in Betrieb befindlicher Instrumentenbeleuchtung entsprechende Werte abzulesen und sich im Cockpit zu orientieren. Nachteilig ist jedoch, daß die zusätzliche Halterung für den Mikroschalter beim Sprechen als störend empfunden wird und eine Lippenberührung letztendlich auch aus hygienischen Gründen Nachteile in sich birgt. Binokulare Teleskope mit einer Verstellmöglichkeit des Gesichtsfelds gehören z.B. aus der offengelegten US-Patentanmeldung mit der Seriennummer 818633 zum Stand der Technik.

Aus dem Vorgenannten ist es Aufgabe der Erfindung, eine weiterentwickelte optische Anordnung mit einer bügel- oder haubenförmigen Kopfhalterung anzugeben, die ein Binokular eines Linsensystems für ein beidäugiges Beobachten tragen kann, wobei die Möglichkeit bestehen soll, in besonders einfacher Weise den Betrachter in die Lage zu versetzen, sich an unterschiedliche Gegebenheiten bezüglich des Gesichtsfelds und der konkret zu lösenden Beobachtungsaufgabe anzupassen. Die zu schaffende Anordnung soll hierbei leichtbauend und fernbetätigbar sein.
Weiterhin ist es Aufgabe der Erfindung, einen elektromechanischen Schalter oder Taster, insbesondere zur Steuerung einer mit einem Antrieb versehenen optischen Anordnung, umfassend u.a. zwei Teleskope, anzugeben, der sich außerhalb des Gesichtsfelds befindet und der beim Sprechen, Essen oder Trinken nicht störend in Erscheinung tritt.

Die Lösung der Aufgabe der Erfindung erfolgt durch eine Anordnung nach den Merkmalen des Patentanspruchs 1 sowie mit einem elektromechanischen Schalter oder Taster nach Patentanspruch 15, wobei die Unteransprüche mindestens zweckmäßige Ausgestaltungen oder Weiterbildungen umfassen.

Erfindungsgemäß umfaßt das Linsensystem der optischen Anordnung zwei Teleskope, deren seitlicher Abstand und der Abstand zwischen Okular und Auge des Beobachters einstellbar ist. Weiterhin ist ein elektromotorischer Antrieb vorgesehen, der dem gleichzeitigen, gegenläufigen Verschwenken der Teleskope in der Längsachsenrichtung dient. Über eine Steuerungseinrichtung wird der Antrieb veranlaßt, die Verschwenkbewegung der Teleskope aufeinander zu oder voneinander weg auszuführen. Die koordinierte Bewegung des Teleskope wird über eine entsprechende mechanische Kopplungseinrichtung realisiert.

Der Antrieb kann in bevorzugter Weise ein Elektromotor mit Untersetzungsgetriebe sein, wobei das Untersetzungsgetriebe abtriebsseitig auf eine Scheibe wirkt, die über ein geführtes Hebelgestänge mit den verschwenkbar gelagerten Teleskopen in Wirkverbindung steht. Die Scheibe kann als Exzenterscheibe ausgebildet sein, die wiederum der Aufnahme eines Betätigungszapfens dient, so daß die Rotationsbewegung in eine translatorische und diese wiederum in ein Verschwenken der gelenkig gelagerten Teleskope umwandelbar ist.

Ein vorhandenes Gehäuse besitzt im Frontbereich zwei langlochförmige Öffnungen für die Teleskope, wobei der Antrieb entweder im Gehäuse integriert oder auf das Gehäuse aufgesetzt ist.

In einer vorgesehenen, an sich bekannten Kopfhalterung kann eine Photovoltaik-Solarzelle integriert oder an dieser befestigt sein.

Am oder im Gehäuse kann eine schaltbare Beleuchtungsquelle vorgesehen werden.

Die Teleskope, aber auch die Gehäuse können Mittel zum Aufnehmen von austauschbaren Vorsatzlinsen aufweisen, so daß eine Anpassung an alle möglichen Einsatzfälle für die optische Anordnung erreicht werden kann.

Die Befestigung des Binokulars bzw. der Teleskope an der Kopfhalterung erfolgt verdreh- und/oder verschwenkbar, um sich hier den anatomischen Anforderungen des jeweiligen Nutzers anzupassen.

Alternativ kann das Gehäuse, welches mindestens die Teleskope sowie Teile des Antriebs aufnimmt, über ein arretierbares Ein- oder Mehrachsengelenk an der Kopfhalterung befestigt werden.

Die Steuerungseinrichtung umfaßt mindestens einen mechanischen oder akustischen Schalter, der bei einer einfachen Ausführungsform als Fuß- oder Handschalter ausgebildet werden kann.

Die erfindungsgemäß eingesetzten Teleskope bilden bevorzugt ein Prismenfernrohr, wobei in einer weiteren Ausführungsform dieses eine Infrarot- oder Ultraschall-Autofokuseinrichtung umfassen kann.

Die mechanische Konstruktion zur Befestigung der Teleskope ist bei einer ersten Ausführungsform derart gewählt, daß diese an einem Tragbalken verschieblich und verschwenkbar befestigt werden. Der Tragbalken weist eine Führung zur Aufnahme je eines Schlittens auf. Am Tragbalken sind zwei sich in Längsrichtung erstreckende Langlöcher ausgebildet, die einen ersten Gelenk- und Befestigungszapfen aufnehmen, welcher einerseits mit den jeweiligen Schlitten und andererseits mit dem Teleskop verbunden ist.

Am zapfenbefestigungsfernen Ende des Schlittens ist ein gelenkiger stangenartigere Hebel angeschlagen, dessen jeweils zweites Hebelarmende einen weiteren, zweiten Zapfen aufnimmt, welcher am okularfernen Ende des Teleskops fixiert ist.
Die weiteren beiden Zapfen stehen kulissengeführt über eine bogenförmige Stange wirkungsseitig in Verbindung, um das gewünschte gemeinsame, gegenläufige Verschwenken der Teleskope um die Achse der ersten Zapfen zu erreichen.

Über den wählbaren Abstand der Schlitten in der Führung des Tragbalkens kann eine Anpassung der Teleskope an den Augenabstand erfolgen.

Von der Tragplatte im wesentlichen mittig und senkrecht in Blickrichtung erstreckt sich ein Fortsatz, welcher eine Langlochführung für einen Stift umfaßt, der wiederum an der bogenförmige Stange befestigt ist, um das gemeinsame Verschwenken der Teleskope zu bewirken. Dieser Fortsatz dient der erwähnten Bewegungsumwandlung bezogen auf das abtriebsseitige Ende des Untersetzungsgetriebes respektive einen scheibenförmigen Exzenter.

Bei einer zweiten Ausführungform der mechanischen Konstruktion zum Verschwenken der Teleskope wird ebenfalls von einem Tragbalken ausgegangen, der eine Führung zur Aufnahme der Schlitten analog der ersten Ausführungsform aufweist. Die Schlitten sind ebenfalls beweglich in der Führung gelagert, um eine Anpassung an den jeweiligen Augenabstand vornehmen zu können.

Unterschiedlich ist jedoch die Hebelausbildung und -anordnung.
Ein Tellerrad treibt einen Endlosexzenter an, der einen Zentralbolzen in einer Schrägführung bewegt. Die Schräg - führung ist am Tragbalken, bevorzugt der Tragbalkenunterseite, befestigt. Insgesamt vier Teleskophebel sind mit jeweils einem Ende am Zentralbolzen drehbeweglich angeschlagen. Zwei okularseitige Teleskophebel sind mit ihrem anderen Ende jeweils an einem einzigen Zentralzapfen gelagert, die wiederum im wesentlichen mittig am jeweiligen Schlitten einerseits und an einer Teleskopaufnahme bzw. am Teleskop selbst andererseits befestigt sind. Jeweils ein okularferner Teleskophebel ist über einen entsprechenden Zapfen am Vorderende des jeweiligen Teleskops gelenkig angeschlagen.
Wird nun der Zentralzapfen in der Schrägführung mittels Exzenterscheibe bewegt, folgen die Teleskope dieser Bewegung, d.h. je nach Bewegungsrichtung verändert sich der Winkel zwischen den beiden Längsachsen der Teleskope.

Die Teleskope selbst können über eine einfache Feder-Schalen-Lagerung gehalten werden.

Der erfindungsgemäße elektromechanische Schalter oder Taster, insbesondere zur Steuerung einer mit einem Antrieb versehenen optischen Anordnung weist mindestens einen verstellbaren Tastarm auf, wobei der Tastarm wangenaußenseitig eines Nutzers positioniert wird und ein Gegenlager am proximalen Ende aufweist. Durch Zungenbewegung kann der Taster am distalen Ende oder eine dort vorgesehene Schalteinheit lageverschoben und hierdurch ein Schaltvorgang ausgelöst werden.

Der Tastarm ist mit seinem proximalen Ende an einem Kopf-, Stirn- oder Ohrbügel oder an einer Kopfbedeckung, z.B. einem Helm befestigt. Das distale Ende des Tastarms kann einen Tastkopf mit einem integrierten Mikroschalter aufweisen.
Der Tastkopf ist beweglich, sich der Wangenkontur anpassend am Tastarm befestigt.

Weiterhin weist der Tastarm eine teleskopartige Längenverstellung mit Feststellmöglichkeit auf, um unterschiedliche anatomische Abstände zwischen dem Bügel oder der Kopfbedeckung und dem relevanten Wangenbereich auszugleichen.

Das proximale Ende des Tastarms wird über eine arretierbare Gelenkverbindung am Bügel, der Kopfbedeckung oder einer dort vorgesehenen Bügelplatte befestigt, um ein Verschwenken und Lageanpassen in Richtung zur Wangenaußenseite hin als auch zur jeweiligen Position auf der Wange zu gewährleisten.

Bei zwei gegenüberliegend sich zum jeweiligen Tastpunkt an der Wangenaußenseite sich erstreckend angeordnet Tastarmen kann durch links- oder rechtsseitiges Betätigen mittels der Zunge ein unterschiedlicher Schaltvorgang, z.B. eine Drehrichtungsumkehr eines Elektromotors bewirkt werden, um die optische Anordnung in Form eines Teleskops bezüglich des Fokuspunkts zu verstellen. Dabei kann eine Betätigungsaktivität ein Aufeinanderzuschwenken der Teleskope und eine weitere Betätigungsaktivität ein Zurückschwenken bewirken.

Die beschriebene Kopfhalterung mit Querbügel kann eine Stirnauflage umfassen, so daß sich der Sitz und die Trage-und damit Halteeigenschaften verbessern und auch ein unerwünschtes Lageverändern der Anordnung bei schnellen Kopfbewegungen verhindert ist.

Die Erfindung soll nachstehend anhand eines Ausführungsbeispiels sowie unter Zuhilfenahme von Figuren näher erläutert werden.

Hierbei zeigen:
- Fig. 1: verschiedene Ansichten einer ersten Ausführungsform der mechanischen Befestigungskonstruktion für die Teleskope;
- Fig. 2: verschiedene Verstellpositionen der Teleskope sowohl hinsichtlich des Außenabstands als auch des Schwenkwinkels bei einer Lösung nach Fig. 1;
- Fig. 3: eine optische Anordnung mit Kopfhalterung und Binokular-Teleskopen einschließlich Wangenschalter betriebsbereit auf einem Kunstkopf;
- Fig. 4: eine Ansicht mit erkennbarer Schrägführung gemäß zweiter Ausführungsform der Hebelverstellung;
- Fig. 5: eine Darstellung mit Antriebstellerrad und Motoraufnahme; und
- Fig. 6: eine Frontalansicht der Hebelkonstruktion mit Schrägführung und Tellerrad gemäß der zweiten Ausführungsform.

Die optische Anordnung nach den Figuren geht von zwei Teleskopen 1 aus, die zusammen ein Fernrohr, insbesondere ein Prismenfernrohr bilden.

Die Teleskope 1 sind auf einem Tragbalken 2 verschieblich gelagert, um eine leichte Anpassung an unterschiedliche Augenabstände zu erreichen. Der Tragbalken weist eine nutartige Führung 3 für jeweils einen Schlitten 4 auf. An jeweils einem Ende des Schlittens 4 ist ein erster Gelenk-und Befestigungszapfen 5 angebracht, welcher sich durch ein jeweiliges Langloch 6 erstreckt, das im Tragbalken 2 vorhanden ist.

Das andere Ende des ersten Zapfens 5 ist am okularseitigen Ende des jeweiligen Teleskops 1 befestigt, daß die gewünschte Verschwenkbarkeit um die Achse des ersten Zapfens 5 erhalten bleibt.

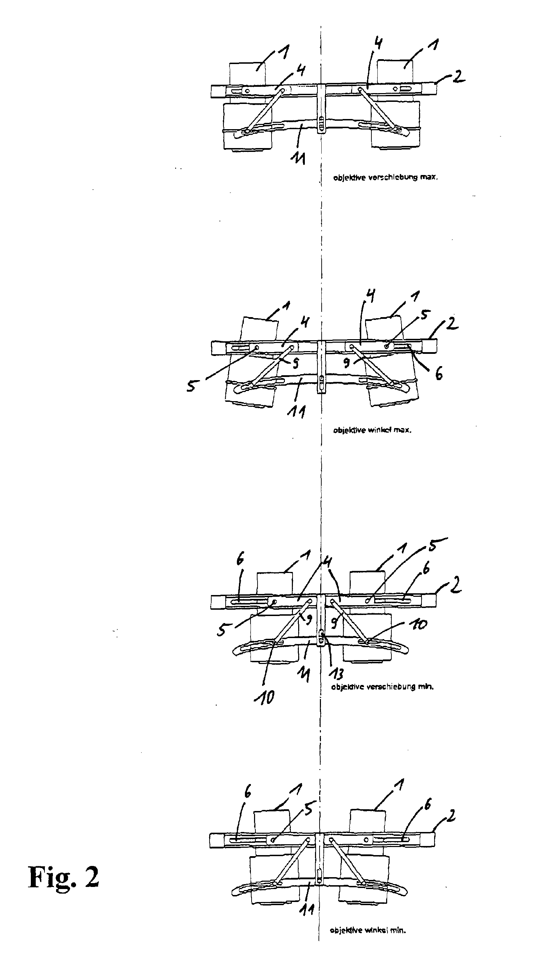

Insbesondere aus Fig. 2 wird deutlich, wie die Objektivverschiebung mittels den Schlitten 4, der Langlöcher 6 und der ersten Zapfen 5 bewirkt ist.

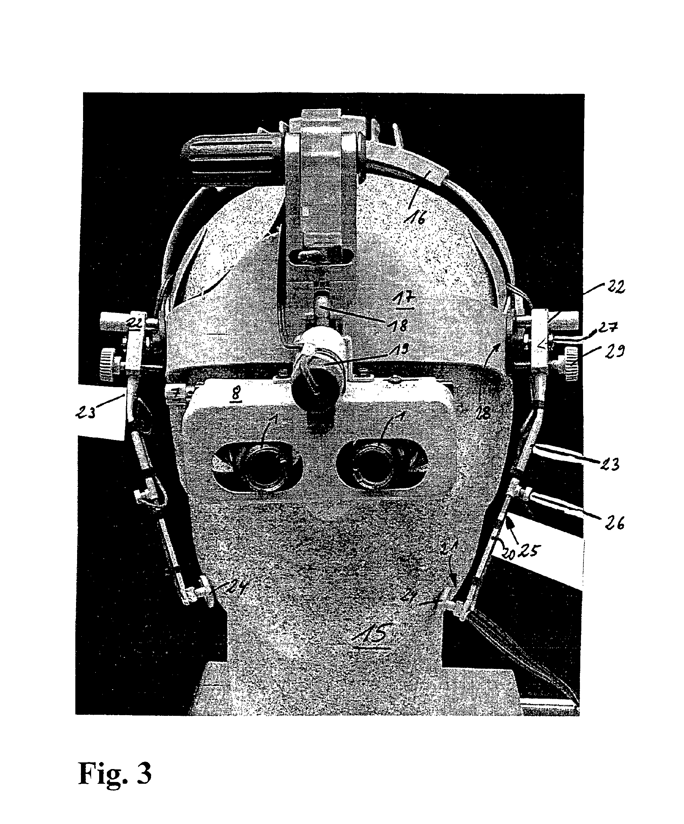

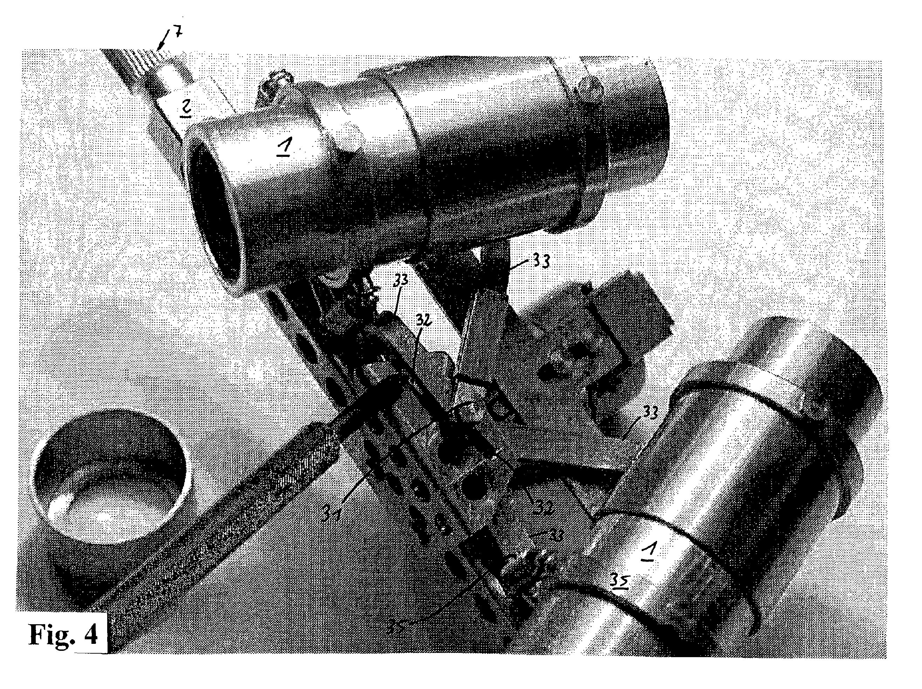

Eine Verstell- bzw. Feststelleinrichtung 7 (Fig. 3 und 4) ist außenseitig eines Gehäuses 8 zugänglich und besitzt eine Markierungsskala, um eine entsprechende Einstellung in leichter Weise wiederzufinden oder vornehmen zu können.

Am zapfenbefestigungsfernen Ende des Schlittens 4 ist jeweils ein gelenkiger Hebel 9 angeschlagen. Dessen jeweils zweites Hebelarmende nimmt einen weiteren zweiten Zapfen 10 auf, welcher am okularfernen Ende des Teleskops 1 fixiert ist.

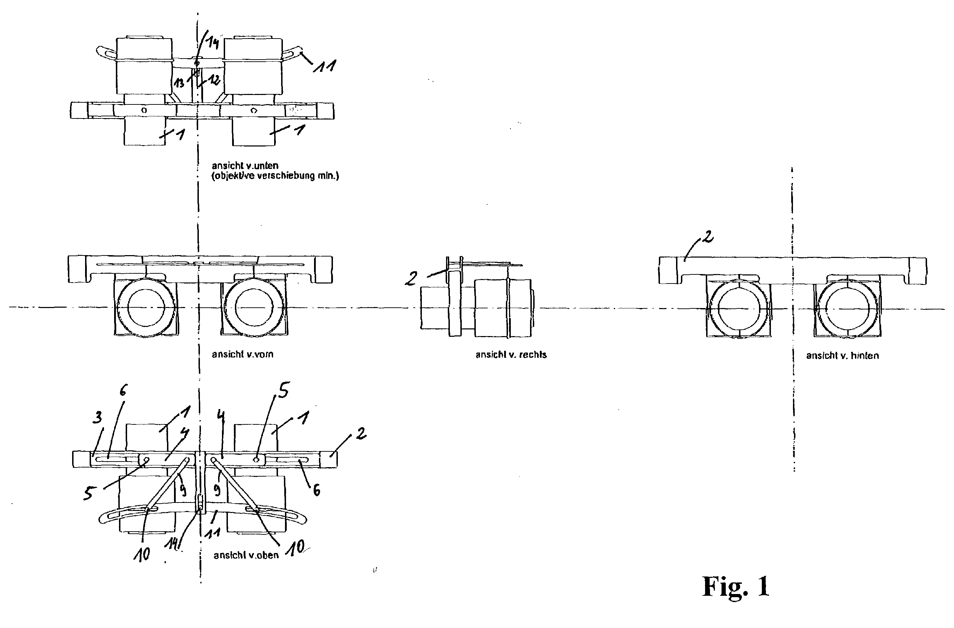

Die beiden weiteren zweiten Zapfen 10 sind, wie in der Fig. 1 und 2 ersichtlich, kulissengeführt, wobei sich die Kulissenführung in einer bogenförmigen Stange 11 befindet.

Vom Tragbalken 2 gemäß Beispiel im wesentlichen mittig, erstreckt sich senkrecht in Blickrichtung nach vorn ein Fortsatz 12, der eine Langlochführung 13 für einen Stift 14 umfaßt, welcher an der bogenförmigen Stange 11 befestigt ist, um das gewünschte Verschwenken der Teleskope 1 zueinander bzw. voneinander weg mit verändertem Fokuspunkt zu bewirken.

Ein nicht gezeigter Antrieb kann oberhalb des Tragbalkens 2 z.B. als Getriebemotor ausgebildet sein, der abtriebsseitig eine Exzenterscheibe umfaßt, die in den Stift 14 eingreift.

Bei Veränderung des Augenabstands bzw. Pupillenabstands oder des Abstands zum betrachtenden Objekt werden die Teleskope durch die beschriebene mechanische Konstruktion immer zwangsweise zu einem gemeinsamen Brenn- oder Fokuspunkt verstellt, wobei mit einer beispielhaften Optik ein Arbeits- bzw. Betrachterabstand im Bereich von 110mm bis 220mm wahlweise während des Betrachtens eingestellt und verändert werden kann.

Die Gesamtanordnung nach Fig. 3, welche auf einem Kunstkopf 15 befestigt ist, läßt die bügel- bzw. haubenförmige Kopfhalterung 16 mit zusätzlicher Stirnplatte 17, Gelenk 18 zur Befestigung des Gehäuses 8, die Teleskope 1 sowie den elektromotorischen Antrieb 19 erkennen. Von besonderer Bedeutung nach Fig. 3 ist der spezielle elektromechanische Schalter oder Taster, der als Wangenschalter ausgebildet ist. Der Schalter umfaßt mindestens einen verstellbaren Tastarm 20, wobei der Tastarm 20 mit seinem distalen Ende 21 wangenaußenseitig des Nutzers positioniert ist. Ein Gegenlager 22 ist am proximalen Ende 23 bevorzugt im Bereich der seitlichen Kopfhalterung vorhanden. Mit einer Zungenbewegung kann die Wange gegen das distale Ende 21 des Tastarms 20 gedrückt werden und einen Schaltvorgang auslösen.

Zum Schalten kann am oder im distalen Ende 21 des verstellbaren Tastarms 20 ein spezieller Tastkopf 24 mit Mikroschalter oder Mikrotaster angeordnet werden. Der Tastkopf 24 ist am distalen Ende 21 des verstellbaren Tastarms 20 gelenkig, um sich der Wangenkontur anzupassen.

Um auf unterschiedliche Abstände zwischen dem Bereich des Gegenlagers 22 und der optimalen Position des Tastkopfs 24 reagieren zu können, ist eine teleskopartige Längenverstellung 25 mit Feststellmöglichkeit 26 vorhanden.

Das proximale Ende 23 des Tastarms 20 ist, wie bereits oben erwähnt, über eine arretierbare Gelenkverbindung 27 am Bügel bzw. einer dort vorgesehenen Bügelplatte 28 befestigt. Durch die arretierbare Gelenkverbindung 27 ist ein Verschwenken des verstellbaren Tastarms 20 respektive des Tastkopfs 24 um den Befestigungspunkt möglich. Ebenso kann mittels der Verstellschraube 29 der Tastkopf 24 in eine Position überführt werden, wo er gerade die Wangenaußenseite berührt, so daß mit geringsten Bewegungen der Zunge ein Schaltvorgang auslösbar ist.

Es liegt im Sinne der Erfindung, daß ein Tastkopf oder ein Tastarm auch in anders gearteter Weise, z.B. von einer Halskrause sich nach oben erstreckend, in Wangenkontakt stehend oder als Hautklebekontakt ausbildbar ist, ohne das Grundkonzept wie vorstehend beschrieben zu verlassen. Auch können auf einer Wangenseite mehrere beabstandete Taster angeordnet werden und es ist eine ein- oder beidseitige Befestigung an gegenüberliegenden Bügelplatten 28 denkbar, wie dies die Fig. 3 beispielhaft darstellt.

Mit Hilfe des gezeigten elektromechanischen Schalters kann die Antriebseinheit, d.h. der Elektromotor zum Verschwenken der Teleskope 1 betätigt werden, ohne daß hierbei Hände oder Füße genutzt werden müssen, die für andere Zwecke, z.B. dem Betätigen von Hebeln oder Pedalen frei zur Verfügung stehen. Alternativ kann das den Schaltvorgang auslösende Mittel auch im Bereich der Bügelplatte 28 angeordnet werdend, wobei allein wesentlich ist, daß durch die Zungenbewegung und mit Hilfe des Tastarms 20 eine mechanische Kraft ausgelöst bzw. übertragen werden kann.

Mit Hilfe der Fig. 4 bis 6 soll eine zweite Ausführungsform der Erfindung mit speziellen Teleskophebeln und einer Schrägführung zur Winkelverstellung der Teleskope 1 näher erläutert werden.

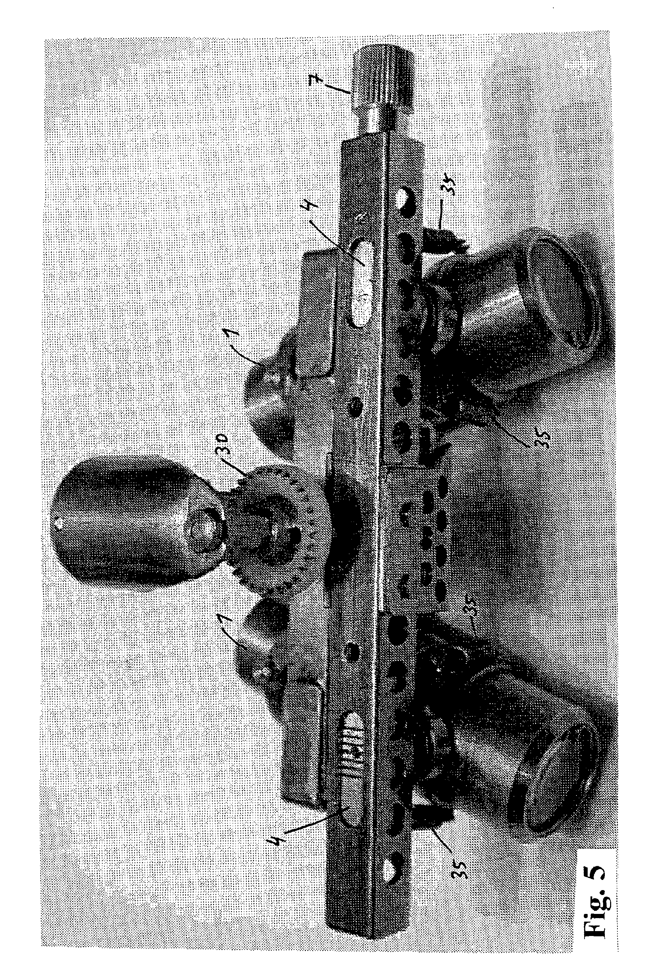

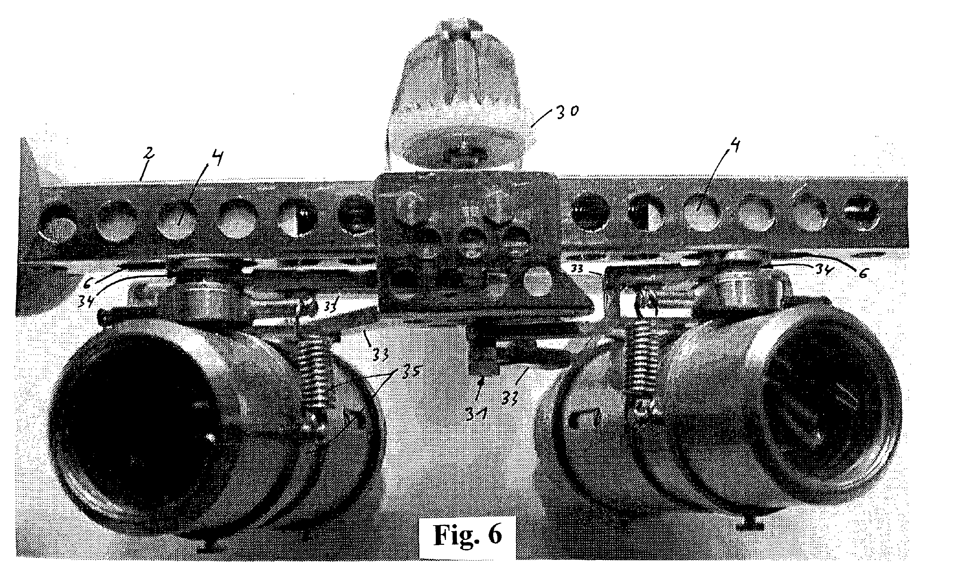

Die vorerwähnte Schrägführung 32 ist insbesondere in der Fig. 4 (Schraubendreherspitze) zu erkennen. In dieser Schrägführung 32 bewegt sich ein Zentralbolzen 31, der über das Tellerrad 30 (siehe Fig. 5 und 6) mittels eines Exzenters antreibbar, d.h. bewegbar ist. Der Zentralbolzen 31 läuft in der Schrägführung 32 zum links- oder rechtsseitigen Anschlag, wobei eine Drehrichtungsumkehr des Motors nicht unbedingt erforderlich ist, da über die Exzenterlösung kein Blockieren beim Erreichen einer Endlage auftritt, sondern eine reversierende Bewegung gegeben ist.

Insgesamt vier Teleskophebel führen mit einem Ende auf den Zentralbolzen 31 und sind mit ihrem anderen Ende einmal am okularnahen Ende und zum anderen am okularfernen Ende des jeweiligen Teleskops 1 dreh- oder verschwenkbeweglich fixiert. Durch die Teleskophebel 33 wird auch ein Blockieren verhindert, wenn die Schlitten 4 mittels der Verstelleinheit 7 zur Einstellung des Pupillen- oder Augenabstands bewegt werden.

Bei der zweiten Ausführungsform nimmt jeder Schlitten 4 einen Zentralzapfen 34 auf, der durch das Langloch 6 am Tragbalken 2 hindurchreicht. Der Zentralzapfen kann nun unmittelbar mit dem jeweiligen Abschnitt des Teleskops 1 in Verbindung stehen, aber auch zu einer Teleskop-Haltevorrichtung führen, die eine Feder-Schalen-Lagerung 35 für das Teleskop 1 umfaßt.

Die Verstelleinheit 7 für den Pupillen- oder Augenabstand umfaßt eine Rändelschraube mit einer Gewindestange, die im Inneren des Tragbalkens 2 verläuft und die über eine Bohrung mit Komplementärgewinde in den Schlitten 4 deren gegenläufiges Bewegen zur Abstandseinstellung bewirkt, wobei hier zum Zweck der entsprechenden Bewegungsrichtung eine Kombination Rechts-/Linksgewinde Anwendung findet.

### Bezugszeichenliste

- 1: Teleskope
- 2: Tragbalken
- 3: nutartige Führung im Tragbalken
- 4: Schlitten
- 5: erster Zapfen
- 6: Langloch im Tragbalken
- 7: Verstell- und Feststelleinheit für den Pupillen- oder Augenabstand
- 8: Gehäuse
- 9: Hebel
- 10: zweiter Zapfen
- 11: bogenförmige Stange
- 12: Fortsatz
- 13: Langlochführung im Fortsatz
- 14: Stift
- 15: Kunstkopf
- 16: Kopfhalterung
- 17: Stirnplatte
- 18: Gelenk für Befestigung des Gehäuses
- 19: Antrieb
- 20: verstellbarer Tastarm
- 21: distales Ende des Tastarms
- 22: Gegenlager
- 23: proximales Ende des Tastarms
- 24: Tastkopf
- 25: teleskopartige Längenverstellung
- 26: Feststellmöglichkeit für die teleskopartige Längenverstellung
- 27: arretierbare Gelenkverbindung
- 28: Bügelplatte
- 29: Verstellschraube für optimalen Wangenkontakt
- 30: Tellerrad
- 31: Zentralbolzen
- 32: Schrägführung
- 33: Teleskophebel
- 34: Zentralzapfen
- 35: Feder-Schalen-Lagerung

## Patentansprüche

1. Optische Anordnung mit einer bügel- oder haubenförmigen Kopfhalterung, wobei im Stirnbereich der Haltung einer Befestigungsfläche oder -flansch vorgesehen, um ein Binokular eines Linsensystems für ein beidäugiges Beobachten aufzunehmen, sowie mit einer elektrischen Steuerungseinrichtung,
**dadurch gekennzeichnet, daß**
das Linsensystem zwei Teleskope umfaßt, deren seitlicher und der Abstand zwischen Okular und Auge des Beobachters einstellbar ist, sowie mit einem motorischen Antrieb zum gleichzeitigen, gegenläufigen Verschwenken der Teleskope in Längsachsenrichtung, wobei durch die Steuerungseinrichtung der Antrieb veranlaßt ist, die Verschwenkbewegung der Teleskope aufeinander zu oder voneinander weg auszuführen.

2. Optische Anordnung nach Anspruch 1,
**dadurch gekennzeichnet, daß**
der Antrieb ein Elektromotor mit Untersetzungsgetriebe ist, welches abtriebsseitig auf eine Scheibe wirkt, die über ein Hebelgestänge mit den verschwenkbar gelagerten Teleskopen in Wirkverbindung steht.

3. Optische Anordnung nach Anspruch 1 oder 2,
**dadurch gekennzeichnet, daß**
ein Gehäuse im Frontbereich zwei Langlochöffnungen für die Teleskope umfaßt, wobei der Antrieb im Gehäuse integriert ist oder auf das Gehäuse aufgesetzt wird.

4. Optische Anordnung nach einem der vorangegangenen Ansprüche,
**dadurch gekennzeichnet, daß**
in der Kopfhalterung eine Photovoltaik-Solarzelle integriert oder an dieser befestigt ist.

5. Optische Anordnung nach Anspruch 4,
**dadurch gekennzeichnet, daß**
in oder am Gehäuse eine schaltbare Beleuchtungsquelle vorgesehen ist.

6. Optische Anordnung nach einem der vorangegangenen Ansprüche,
**dadurch gekennzeichnet, daß**,
am Gehäuse und/oder an den Teleskopen Aufnahmen zum austauschbaren Fixieren von Vorsatzlinsen angebracht oder ausgebildet sind.

7. Optische Anordnung nach Anspruch 1,
**dadurch gekennzeichnet, daß**
die Befestigung des Binokulars an der Kopfhalterung verdreh- und/oder verschwenkbar ist.

8. Optische Anordnung nach Anspruch 3,
**dadurch gekennzeichnet, daß**
das Gehäuse, welches mindestens die Teleskope sowie Teile des Antriebs aufnimmt, über ein arretierbaren ein- oder mehrachsiges Gelenk an der Kopfhalterung befestigt ist.

9. Optische Anordnung nach einem der vorangegangenen Ansprüche,
**dadurch gekennzeichnet, daß**
die Steuerungseinrichtung mindestens einen mechanischen oder akustischen Schalter umfaßt.

10. Optische Anordnung nach einem der vorangegangenen Ansprüche,
**dadurch gekennzeichnet, daß**
die Teleskope ein Prismenfernfohr bilden.

11. Optische Anordnung nach einem der vorangegangenen Ansprüche,
**gekennzeichnet durch**
ein Infrarot- oder Ultraschall-Autofokussystem.

12. Optische Anordnung nach Anspruch 1 oder 2,
**dadurch gekennzeichnet, daß**
die Teleskope an einem Tragbalken verschieblich und verschwenkbar befestigt sind, wobei der Tragbalken eine Führung zur Aufnahme je eines Schlittens aufweist, am Tragbalken zwei in Längsrichtung sich erstreckende Langlöcher ausgebildet sind, die einen ersten Gelenk- und Befestigungszapfen aufnehmen, welcher einerseits mit den jeweiligen Schlitten und andererseits mit dem jeweiligen Teleskop verbunden sind, weiterhin am zapfenbefestigungsfernen Ende des Schlittens ein gelenkiger Hebel angeschlagen ist, dessen jeweils zweites Hebelarmende einen weiteren, zweiten Zapfen aufnimmt, welcher am okularfernen Ende des Teleskops fixiert ist, die weiteren beiden Zapfen kulissengeführt über eine bogenförmige Stange wirkungsseitig in Verbindung stehen, um das gemeinsame, gegenläufige Verschwenken der Teleskope um die Achse der ersten Zapfen zu erreichen.

13. Optische Anordnung nach Anspruch 12,
**dadurch gekennzeichnet, daß**
über den wählbaren Abstand der Schlitten in der Führung des Tragbalkens eine Anpassung der Teleskope an den Augen-bzw. Pupillenabstand erfolgt.

14. Optische Anordnung nach Anspruch 12 oder 13,
**dadurch gekennzeichnet, daß**
sich vom Tragbalken im wesentlichen mittig und senkrecht in Blickrichtung ein Fortsatz erstreckt, welche eine Langlochführung für einen Stift umfaßt, der an der bogenförmigen Stange befestigt ist, um das Verschwenken der Teleskope zu bewirken.

15. Elektromechanischer Schalter oder Taster, insbesondere zur Steuerung einer mit einem Antrieb versehenen optischen Anordnung, umfassend ein Binokular eines Linsensystems für ein beidäugiges Beobachten, wobei das Linsensystem zwei Teleskope aufweist,
**dadurch gekennzeichnet, daß**
mindestens ein verstellbarer Tastarm vorgesehen ist, wobei der Tastarm weiterhin wangenaußenseitig eines Nutzers positioniert wird und ein Gegenlager am proximalen Tastarmende aufweist, wobei durch Zungenbewegung der Tastarm am distalen Ende oder eine dort vorgesehene Schalteinheit lageverschoben und hierdurch ein Schaltvorgang ausgelöst wird.

16. Elektromechanischer Schalter nach Anspruch 15,
**dadurch gekennzeichnet, daß**
der Tastarm mit seinem proximalen Ende an einem Kopf-, Stirn- oder Ohrbügel oder einer Kopfbedeckung befestigt ist.

17. Elektromechanischer Schalter nach Anspruch 15 oder 16,
**dadurch gekennzeichnet, daß**
am distalen Ende des Tastarms ein Tastkopf mit einem Mikroschalter vorgesehen ist.

18. Elektromechanischer Schalter nach Anspruch 17,
**dadurch gekennzeichnet, daß**
der Tastkopf beweglich sich der Wangenaußenkontur anpassend am Tastarm befestigt ist.

19. Elektromechanischer Schalter nach einem der Ansprüche 15 bis 18,
**dadurch gekennzeichnet, daß**
der Tastarm eine teleskopartige Längenverstellung mit Feststellmöglichkeit aufweist.

20. Elektromechanischer Schalter nach einem der Ansprüche 16 bis 19,
**dadurch gekennzeichnet, daß**
das proximale Ende des Tastarms über eine arretierbare Gelenkverbindung am Bügel, der Kopfbedeckung oder einer dort vorgesehenen Bügelplatte befestigt ist, um ein Verschwenken und Lageanpassen sowohl in Richtung zur Wangenaußenseite hin als auch zur jeweiligen Position uaf der Wange zu gewährleisten.

21. Optische Anordnung nach Anspruch 1 oder 2,
**dadurch gekennzeichnet, daß**
die Teleskope an einem Tragbalken verschieblich und verschwenkbar befestigt sind, wobei der Tragbalken eine Führung zur Aufnahme je eines Schlittens aufweist, am Tragbalken zwei in Längsrichtung sich erstreckende Langlöcher ausgebildet sind, diese einen Zentralzapfen aufnehmen, welcher einerseits mit den jeweiligen Schlitten und andererseits mit dem jeweiligen Teleskop oder einer Teleskop-Halterungseinrichtung verbunden ist, weiterhin am Zentralzapfen jeweils ein okularseitiger Teleskophebel angeschlagen ist, dessen jeweils zweites Hebelende zu einem Zentralbolzen führt; weiterhin jeweils ein okularferner Teleskophebel über einen Zapfen am Vorderende des jeweiligen Teleskops oder einer dort befindlichen Halterung gelenkig angeschlagen ist, wobei das jeweils andere Ende des okularfernen Teleskophebels ebenfalls am Zentralbolzen drehbeweglich angeschlagen ist,
der Tragbalken mit einer Schrägführung in Verbindung steht, die der Aufnahme des Zentralbolzens dient, wobei der Zentralbolzen von einer Exzenterscheibe in der Schrägführung hin- und herbewegbar ist, um die gewünschte Verstellung der Teleskope zu bewirken.
